# FASCICULE DE BREVET EUROPEEN

(11) **EP 2 766 591 B1**
(45) Date de publication et mention de la délivrance du brevet: **16.09.2015**
(21) Numéro de dépôt: 12781368.1
(22) Date de dépôt: 08.10.2012
(51) Int. Cl.: F02K 9/48, F02K 9/64, F02K 9/88

(54) **DISPOSITIF DE PROPULSION À RÉACTION ET PROCÉDÉ D'ALIMENTATION EN ERGOLS**
STRAHLANTRIEBSVORRICHTUNG UND BRENNSTOFFZUFUHRVERFAHREN
JET PROPULSION DEVICE AND FUEL SUPPLY METHOD

(30) Priorité: 11.10.2011 FR 1159177
(43) Date de publication de la demande: 20.08.2014
(73) Titulaire: SNECMA, 75015 Paris (FR)
(72) Inventeur: SOULIER, Nicolas, F-27600 Fontaine Bellenger (FR); BROCHARD, Bruno, F-27120 Houlbec Cocherel (FR); SANNINO, Jean-Michel, F-27950 Saint-Marcel (FR)
(74) Mandataire: Calvo de Nó, Rodrigo
(86) Numéro de dépôt international: PCT/FR2012/052278
(87) Numéro de publication internationale: WO 2013/054027

(56) Documents cités:
- EP-A2- 2 103 799
- FR-A1- 2 531 141
- FR-A6- 2 031 047
- GB-A- 1 210 601
- RU-C1- 2 040 703
- US-A- 3 541 793
- US-A- 5 444 973
- BUCKMANN P S: "DESIGN AND TEST OF AN OXYGEN TURBOPUMP FOR A DUAL EXPANDER CYCLE ROCKET ENGINE", JOURNAL OF PROPULSION AND POWER, AMERICAN INSTITUTE OF AERONAUTICS AND ASTRONAUTICS. NEW YORK, US, vol. 8, no. 1, 1 janvier 1992 (1992-01-01) , pages 80-86, XP000244087, ISSN: 0748-4658

## Description

### Arrière-plan de l'invention

La présente invention concerne le domaine des dispositifs de propulsion à réaction, et en particulier des dispositifs de propulsion à réaction à deux ergols, c'est-à-dire notamment les moteurs fusées.

Dans la description qui suit, les termes "amont" et "aval" sont définis par rapport au sens de circulation normal des ergols dans les circuits d'alimentation en ergols du dispositif de propulsion à réaction.

Depuis l'aube de l'âge spatiale, un des principaux problèmes techniques a été celui d'assurer l'alimentation des propulseurs en ergols. Bien que l'utilisation d'ergols liquides permette un fonctionnement contrôlé du propulseur, ce qui n'est pas le cas avec les ergols solides, ces ergols liquides doivent normalement être injectés à haute pression dans la chambre propulsive, afin de surmonter la pression régnant à l'intérieur de celle-ci pendant le fonctionnement du propulseur. Tant que la pression dans la chambre propulsive n'est pas trop élevée, ceci peut être réalisé de manière comparativement simple en pressurisant les réservoirs d'ergols. Toutefois, si on veut augmenter la poussée spécifique du propulseur, il est nécessaire d'augmenter la pression dans la chambre propulsive au-delà de la pression qu'on pourra normalement atteindre par une pressurisation des réservoirs. Ainsi, on utilise typiquement des turbopompes pour assurer l'alimentation de la chambre propulsive en ergols à très haute pression. Une telle turbopompe comporte normalement au moins une pompe et au moins une turbine couplée à cette pompe, de telle manière que la détente d'un gaz dans la turbine actionne la pompe. Des différents arrangements ont été proposés pour les turbopompes. Ainsi, dans certains cas, comme par exemple dans les dispositifs décrits dans le brevet US 5,444,973 et dans le brevet russe RU 2040703 C1, une seule turbine entraîne deux pompes, une pour chaque ergol, directement ou à travers un engrenage. Dans d'autres cas, chaque ergol est propulsé par une turbopompe séparée. Typiquement, le gaz utilisé pour actionner la ou les turbopompes par sa détente est issu d'un générateur de gaz, et un particulier d'un générateur de gaz alimenté aussi en ergols.

Toutefois, cette solution présente aussi certains inconvénients. En particulier, les ergols étant hautement réactifs, il est généralement nécessaire d'isoler, dans chaque turbopompe, les gaz de combustion d'au moins un des ergols. En particulier quand un des ergols est un liquide hautement oxydant, comme par exemple l'oxygène liquide, il est important de séparer le flux d'oxygène liquide des gaz de combustion produits par le générateur de gaz, qui sont normalement légèrement réducteurs, de manière fiable.

Dans de tels dispositifs de propulsion à réaction, on utilise souvent aussi des chambres propulsives régénératives, dans lesquelles sont intégrés des échangeurs de chaleur traversés par au moins un des ergols liquides, afin de refroidir les parois de la chambre propulsive tout en préchauffant au moins une partie de l'ergol. Plusieurs dispositifs de ce type furent divulgués dans le brevet britannique GB 1 210 601. Il a aussi été proposé d'utiliser, en aval de ces échangeurs de chaleur, au moins un ergol ainsi préchauffé pour actionner, par sa détente, la ou les turbopompes d'alimentation. La demande de brevet européen EP 2 103 799 A2 divulgue un tel dispositif de propulsion à réaction. Toutefois, ce dispositif présente toujours l'inconvénient de la proximité des deux ergols dans l'une des turbopompes, puisque les deux turbopompes y sont actionnées par la détente successive du même ergol.

Le brevet français FR 2 031 047 divulgue un dispositif de propulsion à réaction comportant un propulseur principal avec une chambre propulsive, un premier circuit d'alimentation, avec une première turbopompe comportant une turbine couplée à une pompe, pour fournir un premier ergol à la chambre propulsive du propulseur principal, et un deuxième circuit d'alimentation, avec une deuxième turbopompe comportant aussi une turbine couplée à une pompe, pour fournir un deuxième ergol à la chambre propulsive du propulseur principal en un deuxième ergol. La chambre propulsive du propulseur principal est une chambre propulsive régénérative, comportant un premier échangeur de chaleur et un deuxième échangeur de chaleur.

Dans ce dispositif de l'art antérieur, le premier circuit d'alimentation traverse, en aval du premier échangeur de chaleur, la turbine de la première turbopompe, et le deuxième circuit d'alimentation traverse, en aval du deuxième échangeur de chaleur, la turbine de la deuxième turbopompe. Ainsi, chacun des ergols est pompé vers la chambre propulsive du propulseur principal par une pompe entraînée par une turbine actionnée par la détente du même ergol. Il n'est donc plus nécessaire d'assurer une séparation complète entre pompe et turbine dans chaque turbopompe.

Toutefois, comme dans ce dispositif de l'art antérieur l'entièreté du débit de chacun des deux ergols est détendue dans la turbine de chaque turbopompe avant son injection dans la chambre propulsive, la pression d'injection, et donc la pression dans la chambre propulsive, ainsi que la poussée spécifique, restent limitées.

### Objet et résumé de l'invention

La présente invention vise à remédier à ces inconvénients. Dans au moins un mode de réalisation de l'invention, ce but est atteint grâce au fait que le premier circuit d'alimentation présente, en aval de la pompe de la première turbopompe, une dérivation traversant le premier échangeur de chaleur et la turbine de la première turbopompe, et le deuxième circuit d'alimentation présente, en aval de la pompe de la deuxième turbopompe, une dérivation traversant le deuxième échangeur de chaleur et la turbine de la deuxième turbopompe, et à ce qu'il comprend aussi au moins un propulseur secondaire connecté auxdites dérivations en aval des turbines des première et deuxième turbopompes. Ainsi, au lieu de détendre tout le débit des deux ergols pour entraîner les turbopompes, uniquement un débit secondaire de chaque ergol est utilisé pour actionner la turbopompe respective avant d'être fourni à un ou plusieurs propulseurs secondaires. Le débit principal de chaque ergol peut donc être directement fourni à la chambre propulsive à haute pression, tandis que, dans les turbines des deux turbopompes, les débits secondaires des deux ergols peuvent être détendus jusqu'à une pression sensiblement moins élevée, puisque l'au moins un propulseur secondaire, qui peut être un propulseur de commande d'orientation de type Vernier, par exemple, ne doit pas nécessairement atteindre une poussée spécifique très élevée.

En particulier mais non seulement quand ledit au moins un propulseur secondaire est un propulseur de commande d'orientation, ce dispositif de propulsion peut comporter des vannes interposées entre lesdites turbines et ledit au moins un propulseur secondaire, et permettant ainsi de commander l'alimentation dudit au moins un propulseur secondaire en ergols, et donc sa poussée. Dans ce cas aussi, ce dispositif de propulsion peut comporter une pluralité de propulseurs secondaires connectés en aval des turbines des première et deuxième turbopompes, afin, notamment, de générer des poussées sur une pluralité d'axes distincts. Toutefois, alternativement ou en complément aux vannes situées entre les turbines et ledit au moins un propulseur secondaires, chaque dérivation peut aussi comporter une vanne située en amont de l'échangeur de chaleur correspondant, permettant ainsi de réguler l'entrée des ergols dans lesdites dérivations.

En outre, dans au moins certains modes de réalisation, ledit premier échangeur de chaleur et/ou ledit deuxième échangeur de chaleur peuvent être intégrés à une paroi externe de ladite chambre propulsive. En particulier, le premier et/ou deuxième échangeur de chaleur intégré à la paroi externe de la chambre propulsive comporte au moins un conduit d'ergol adjacent à un côté extérieur de ladite paroi, facilitant ainsi l'échange de chaleur entre la paroi externe de la chambre propulsive et l'ergol traversant cet échangeur de chaleur, tout en limitant la masse et complexité de l'échangeur de chaleur.

La présente invention concerne aussi un lanceur spatial comportant au moins un tel dispositif de propulsion à réaction, quoique ce dispositif puisse aussi être utilisé pour la propulsion d'autres types d'engins aéronautiques et/ou spatiaux.

La présente invention concerne aussi un procédé d'alimentation en ergols d'un dispositif de propulsion à réaction. Dans au moins un mode de mise en oeuvre de ce procédé, un débit principal d'un premier ergol est fourni à une chambre propulsive d'un propulseur principal, à travers un premier circuit d'alimentation dans lequel le premier ergol est pompé par une pompe d'une première turbopompe. Un débit principal d'un deuxième ergol est aussi fourni à la chambre propulsive du propulseur principal, à travers un deuxième circuit d'alimentation dans lequel le deuxième ergol est pompé par une pompe d'une deuxième turbopompe. Un débit secondaire du premier ergol est dérivé du débit principal du premier ergol, en aval de la pompe de la première turbopompe, chauffé par la chambre propulsive du propulseur principal dans un premier échangeur de chaleur, et détendu dans une turbine actionnant la première turbopompe, et un débit secondaire du deuxième ergol est dérivé du débit principal du deuxième ergol, en aval de la pompe de la première turbopompe, chauffé par la chambre propulsive du propulseur principal dans un deuxième échangeur de chaleur, et détendu dans une turbine actionnant la deuxième turbopompe. Finalement, lesdits débits secondaires des premier et deuxième ergols sont fournis, après leur détente dans les turbines des première et deuxième turbopompes, à au moins un propulseur secondaire.

Une poussée dudit au moins un propulseur secondaire peut notamment être utilisée pour une commande d'orientation, permettant ainsi de diriger la trajectoire d'un engin propulsé par ce dispositif pendant son fonctionnement. En particulier mais pas uniquement dans ce cas, les débits d'ergols fournis à chaque propulseur secondaire peuvent être régulés par des vannes interposées entre lesdites turbines et ledit au moins un propulseur secondaire. Alternativement ou en complément à cette régulation individuelle de débit en aval des turbines, lesdits débits secondaires peuvent aussi être régulés par des vannes situées en amont des échangeurs de chaleur.

Afin d'obtenir une efficacité particulièrement élevée du refroidissement de la paroi externe de la chambre, ledit premier et/ou deuxième ergol peut être liquide en amont du premier et/ou du deuxième échangeur de chaleur, et gazeux en aval. Cette vaporisation de l'ergol dans l'échangeur présente aussi l'avantage d'augmenter la puissance pouvant être extraite du débit d'ergol par sa détente dans la turbine en aval.

### Brève description du dessin

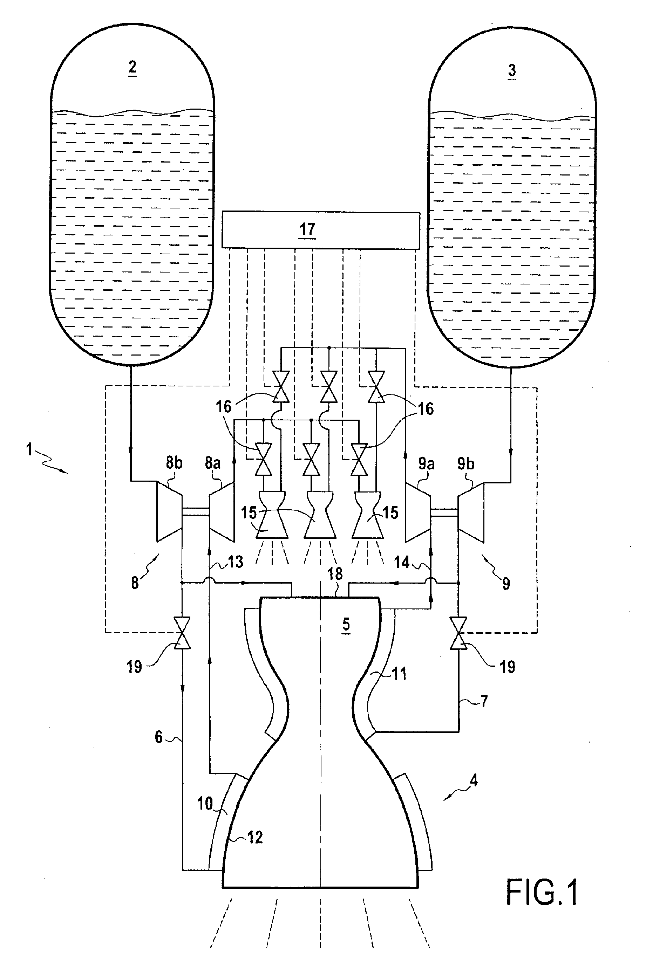

L'invention sera bien comprise et ses avantages apparaîtront mieux, à la lecture de la description détaillée qui suit, d'un mode de réalisation représenté à titre d'exemple non limitatif. La description se réfère à la figure 1 annexée, illustrant de manière schématique un dispositif de propulsion à réaction suivant un mode de réalisation de l'invention.

### Description détaillée de l'invention

La figure 1 illustre un dispositif 1 de propulsion à réaction suivant un mode de réalisation de l'invention, lequel est alimenté en ergols liquides à partir de deux réservoirs 2,3, contenant respectivement un premier et un deuxième ergol (par exemple, hydrogène et oxygène liquides). Ce dispositif 1 comporte un propulseur principal 4 avec une chambre propulsive 5, un premier circuit d'alimentation 6, connecté au premier réservoir 2 et à la chambre propulsive 5 pour fournir le premier ergol à la chambre propulsive 5, et un deuxième circuit d'alimentation 7, connecté au deuxième réservoir 3 et à la chambre propulsive 5 pour fournir le deuxième ergol à la chambre propulsive 5. Le premier circuit d'alimentation 6 comprend une première turbopompe 8 comportant une turbine 8a couplée à une pompe 8b. Le deuxième circuit d'alimentation 7 comprend une deuxième turbopompe 9, séparée de la première turbopompe 8, et comportant aussi une turbine 9a couplée à une pompe 9b. La chambre propulsive 5 est une chambre propulsive régénérative, comportant un premier échangeur de chaleur 10 et un deuxième échangeur de chaleur 11. Ces premier et deuxième échangeurs de chaleur 10, 11 peuvent être formés, par exemple, par des conduits d'ergols enroulés autour d'une paroi externe 12 de la chambre propulsive 5 et/ou par des serpentins intégrés dans ladite paroi externe 12.

Le premier circuit d'alimentation 6 présente, en aval de la pompe 8b, une dérivation 13 traversant le premier échangeur de chaleur 10 et la turbine 8a, tandis que le deuxième circuit d'alimentation 7 présente, en aval de la pompe 9b, une dérivation 14 traversant le deuxième échangeur de chaleur 11 et la turbine 9a de la deuxième turbopompe 9. En outre, le dispositif 1 comporte une pluralité de propulseurs secondaires 15, connectés chacun auxdites dérivations 13,14, en aval desdites turbines 9a, 9b, à travers des vannes de commande 16. D'autres vannes de commande 19 sont situées en amont des échangeurs de chaleur 10, 11 pour ainsi permettre de réguler les débits secondaires circulant à travers les dérivations 13, 14. Les propulseurs secondaires 15 peuvent être orientés suivant des axes différents et/ou être orientables, de manière à pouvoir servir, en tant que propulseurs Vernier, à la commande d'orientation d'un engin propulsé par le dispositif 1. Pour cela, les vannes 16, 19 peuvent aussi être connectées, comme illustré, à une unité de commande 17 apte à recevoir des commandes externes, ainsi que des signaux de capteurs de vitesse, position, accélération et/ou orientation, par exemple, afin de piloter les propulseurs secondaires 15.

En fonctionnement, un débit principal du premier ergol est pompé par la pompe 8b, à travers le premier circuit d'alimentation 6, du premier réservoir 2 jusqu'à une plaque d'injection 18 de la chambre propulsive 5. Un débit principal du deuxième ergol est pompé par la pompe 9b, à travers le deuxième circuit d'alimentation 7, du deuxième réservoir 3 jusqu'à la plaque d'injection 18. Les deux ergols sont ainsi injectés dans la chambre propulsive 5 à travers la plaque d'injection 18, et leur réaction à l'intérieur de cette chambre produit des gaz chauds dont l'expansion dans la tuyère de la chambre propulsive 5 génère la poussée du propulseur principal 4. Tandis que le débit principal de chacun des ergols est injecté dans la chambre propulsive 5, un débit secondaire de chaque ergol, régulé par les vannes 19, est dérivé aux dérivations 13, 14 pour circuler à travers les échangeurs de chaleur 10,11, se vaporisant dans ces échangeurs de chaleur 10,11 avant d'alimenter, à l'état gazeux, les turbines 8a, 9a et ainsi entraîner les pompes 8b, 9b par leur détente. La vaporisation des ergols dans les échangeurs de chaleur 10,11 a aussi l'effet de refroidir la paroi externe 12 de la chambre propulsive 5 de la chaleur produite par la réaction des ergols dans la chambre propulsive 5.

Après leur détente dans les turbines 8a, 9a, les débits secondaires des deux ergols, régulés par les vannes 16, alimentent les propulseurs secondaires 15. L'unité de commande 17, sur base des commandes externes et/ou des signaux émis par les différents capteurs, pilotent les vannes 16 pour commander l'orientation de l'engin propulsé par le dispositif 1.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par exemple, les débits secondaires des deux ergols pourraient n'être régulés que par des vannes en aval des turbines, ou par des vannes en amont des échangeurs de chaleur. Par conséquent, la description et les dessins doivent être considérés dans un sens illustratif plutôt que restrictif.

## Revendications

1. Dispositif (1) de propulsion à réaction comportant, au moins :
un propulseur principal (4) avec une chambre propulsive (5) ;
un premier circuit d'alimentation (6), avec une première turbopompe (8) comportant au moins une turbine (8a) couplée à une pompe (8b), pour fournir un premier ergol à la chambre propulsive (5) du propulseur principal (4) ;
un deuxième circuit d'alimentation (7), avec une deuxième turbopompe (9) comportant aussi au moins une turbine (9a) couplée à une pompe (9b), pour fournir un deuxième ergol à la chambre propulsive (5) du propulseur principal (4) ;
dans lequel ladite chambre propulsive (5) du propulseur principal (4) est une chambre propulsive régénérative, comportant un premier échangeur de chaleur (10) et un deuxième échangeur de chaleur (11), et ledit premier circuit d'alimentation (6) présente, en aval de la pompe (8b) de la première turbopompe (8), une dérivation (13) à travers le premier échangeur de chaleur (10) et la turbine (8a) de la première turbopompe (8) ; et
**caractérisé en ce que** ledit deuxième circuit d'alimentation (7) présente, en aval de la pompe (9b) de la deuxième turbopompe (9), une dérivation (14) à travers le deuxième échangeur de chaleur (11) et la turbine (9a) de la deuxième turbopompe (9) ; et **en ce qu'**il comprend aussi au moins un propulseur secondaire (15) connecté auxdites dérivations (13,14) en aval des turbines (8a,9a) des première et deuxième turbopompes (8,9).

2. Dispositif (1) de propulsion à réaction suivant la revendication 1, comportant des vannes (16) interposées entre lesdites turbines (8a,9a) et ledit au moins un propulseur secondaire (15).

3. Dispositif (1) de propulsion à réaction suivant l'une quelconque des revendications 1 ou 2, comportant une pluralité de propulseurs secondaires (15) connectés en aval des turbines (8a,9a) des première et deuxième turbopompes (8,9).

4. Dispositif (1) de propulsion à réaction suivant l'une quelconque des revendications 1 à 3, dans lequel ledit premier échangeur de chaleur (10) et/ou ledit deuxième échangeur de chaleur (11) sont intégrés à une paroi externe (12) de ladite chambre propulsive (5).

5. Dispositif (1) de propulsion à réaction suivant la revendication 4, dans lequel le premier et/ou deuxième échangeur de chaleur (10,11) intégré à la paroi externe (12) de la chambre propulsive (5) comporte au moins un conduit d'ergol adjacent à un côté extérieur de ladite paroi (12).

6. Lanceur spatial comportant au moins un dispositif (1) de propulsion à réaction suivant l'une quelconque des revendications précédentes.

7. Procédé d'alimentation en ergols d'un dispositif (1) de propulsion à réaction, dans lequel :
un débit principal d'un premier ergol est fourni à une chambre propulsive (5) d'un propulseur principal (4), à travers un premier circuit d'alimentation (6) dans lequel le premier ergol est pompé par une pompe (8b) d'une première turbopompe (8);
un débit secondaire du premier ergol est dérivé du débit principal du premier ergol, en aval de la pompe (8b) de la première turbopompe (8), chauffé par la chambre propulsive (5) du propulseur principal (4) dans un premier échangeur de chaleur (10), et détendu du dans une turbine (8a) actionnant la première turbopompe (8) ; et
un débit principal d'un deuxième ergol est aussi fourni à la chambre propulsive (5) du propulseur principal (4), à travers un deuxième circuit d'alimentation (7) dans lequel le deuxième ergol est pompé par une pompe (9b) d'une deuxième turbopompe (9); et
**caractérisé en ce que** :
un débit secondaire du deuxième ergol est dérivé du débit principal du deuxième ergol, en aval de la pompe (9b) de la deuxième turbopompe (9), chauffé par la chambre propulsive (5) du propulseur principal (4) dans un deuxième échangeur de chaleur (11), et détendu dans une turbine (9a) actionnant la deuxième turbopompe (9) ; et
lesdits débits secondaires des premier et deuxième ergols sont fournis, après leur détente dans les turbines (8a,9a) des première et deuxième turbopompes (8,9), à au moins un propulseur secondaire (15).

8. Procédé d'alimentation en ergols suivant la revendication 7, dans lequel une poussée dudit au moins un propulseur secondaire (15) est utilisée pour une commande d'orientation.

9. Procédé d'alimentation en ergols suivant l'une quelconque des revendications 7 ou 8, dans lequel les débits d'ergols fournis à chaque propulseur secondaire (15) sont régulés par des vannes (16) interposées entre lesdites turbines (8a,9a) et ledit au moins un propulseur secondaire (15).

10. Procédé d'alimentation en ergols suivant l'une quelconque des revendications 7 à 9, dans lequel ledit premier et/ou deuxième ergol est liquide en amont du premier et/ou du deuxième échangeur de chaleur (10,11), et gazeux en aval.

## Patentansprüche

1. Strahlantriebsvorrichtung (1), mindestens umfassend:
ein Haupttriebwerk (4) mit einer Triebwerkskammer (5),
einen ersten Zufuhrkreis (6) mit einer ersten Turbopumpe (8), umfassend mindestens eine Turbine (8a), die an eine Pumpe (8b) gekoppelt ist, um einen ersten Treibstoff an die Triebwerkskammer (5) des Haupttriebwerks (4) zu liefern,
einen zweiten Zufuhrkreis (7) mit einer zweiten Turbopumpe (9), ebenfalls umfassend mindestens eine Turbine (9a), die mit einer Pumpe (9b) gekoppelt ist, um einen zweiten Treibstoff an die Triebwerkskammer (5) des Haupttriebwerks (4) zu liefern,
bei der die Triebwerkskammer (5) des Haupttriebwerks (4) eine regenerative Triebwerkskammer ist, umfassend einen ersten Wärmetauscher (10) und einen zweiten Wärmetauscher (11), und der erste Zufuhrkreis (6) stromabwärts zur Pumpe (8b) der ersten Turbopumpe (8) eine Abzweigung (13) durch den ersten Wärmetauscher (10) und die Turbine (8a) der ersten Turbopumpe (8) aufweist, und
**dadurch gekennzeichnet, dass** der zweite Zufuhrkreis (7) stromabwärts zur Pumpe (9b) der zweiten Turbopumpe (9) eine Abzweigung (14) durch den zweiten Wärmetauscher (11) und die Turbine (9a) der zweiten Turbopumpe (9) aufweist; und dass sie auch mindestens ein Hilfstriebwerk (15) umfasst, das an die Abzweigungen (13, 14) stromabwärts zu den Turbinen (8a, 9a) der ersten und zweiten Turbopumpen (8, 9) angeschlossen ist.

2. Strahlantriebsvorrichtung (1) nach Anspruch 1, umfassend Ventile (16), die zwischen den Turbinen (8a, 9a) und dem mindestens einen Hilfstriebwerk (15) angeordnet sind.

3. Strahlantriebsvorrichtung (1) nach einem der Ansprüche 1 oder 2, umfassend eine Vielzahl von Hilfstriebwerken (15), die stromabwärts zu den Turbinen (8a, 9a) der ersten und zweiten Turbopumpen (8, 9) angeschlossen sind.

4. Strahlantriebsvorrichtung (1) nach einem der Ansprüche 1 bis 3, bei der der erste Wärmetauscher (10) und/oder der zweite Wärmetauscher (11) in eine äußere Wand (12) der Triebwerkskammer (5) integriert sind.

5. Strahlantriebsvorrichtung (1) nach Anspruch 4, bei der der erste und/oder der zweite Wärmetauscher (10, 11), der in die äußere Wand (12) der Triebwerkskammer (5) integriert ist, mindestens eine Treibstoffleitung umfasst, die an eine Außenseite der Wand (12) angrenzt.

6. Trägerrakete, umfassend mindestens eine Strahlantriebsvorrichtung (1) nach einem der vorhergehenden Ansprüche.

7. Treibstoffzufuhrverfahren für eine Strahlantriebsvorrichtung (1), bei dem:
ein Hauptstrom eines ersten Treibstoffes an eine Triebwerkskammer (5) eines Haupttriebwerks (4) durch einen ersten Zufuhrkreis (6) geliefert wird, in der der erste Treibstoff durch eine Pumpe (8b) einer ersten Turbopumpe (8) gepumpt wird,
ein Hilfsstrom des ersten Treibstoffes von dem Hauptstrom des ersten Treibstoffes stromabwärts zu der Pumpe (8b) der ersten Turbopumpe (8) abgezweigt, von der Triebwerkskammer (5) des Haupttriebwerks (4) in einem ersten Wärmetauscher (10) erhitzt und in einer Turbine (8a), die die erste Turbopumpe (8) betätigt, expandiert wird, und
ein Hauptstrom eines zweiten Treibstoffes auch an die Triebwerkskammer (5) des Haupttriebwerks (4) durch einen zweiten Zufuhrkreis (7) geliefert wird, in die der zweite Treibstoff durch eine Pumpe (9b) einer zweiten Turbopumpe (9) gepumpt wird, und
**dadurch gekennzeichnet, dass**:
ein Hilfsstrom des zweiten Treibstoffes von dem Hauptstrom des zweiten Treibstoffes stromabwärts zu der Pumpe (9b) der zweiten Turbopumpe (9) abgezweigt, durch die Triebwerkskammer (5) des Haupttriebwerks (4) in einem zweiten Wärmetauscher (11) erhitzt und in einer Turbine (9a), die die zweite Turbopumpe (9) betätigt, expandiert wird, und
die Hilfsströme der ersten und zweiten Treibstoffe nach ihrer Expansion in den Turbinen (8a, 9a) der ersten und zweiten Turbopumpen (8, 9) an mindestens ein Hilfstriebwerk (15) geliefert werden.

8. Treibstoffzufuhrverfahren nach Anspruch 7, bei dem ein Schub des mindestens einen Hilfstriebwerks (15) für eine Richtungssteuerung verwendet wird.

9. Treibstoffzufuhrverfahren nach einem der Ansprüche 7 oder 8, bei dem die an jedes Hilfstriebwerk (15) gelieferten Treibstoffmengen durch Ventile (16) reguliert werden, die zwischen den Turbinen (8a, 9a) und dem mindestens einen Hilfstriebwerk (15) angeordnet sind.

10. Treibstoffzufuhrverfahren nach einem der Ansprüche 7 bis 9, bei dem der erste und/oder der zweite Treibstoff stromaufwärts zum ersten und/oder zum zweiten Wärmetauscher (10, 11) flüssig und stromabwärts gasförmig ist.

## Claims

1. A reaction propulsion device (1) comprising at least:
a main thruster (4) with a propulsion chamber (5);
a first feed circuit (6) with a first turbopump (8) comprising at least a turbine (8a) coupled to a pump (8b) in order to deliver a first propellant to the propulsion chamber (5) of the main thruster (4); and
a second feed circuit (7) with a second turbopump (9) likewise comprising at least a turbine (9a) coupled to a pump (9b) to deliver a second propellant to the propulsion chamber (5) of the main thruster (4);
wherein said propulsion chamber (5) of the main thruster (4) is a regenerative propulsion chamber, including a first heat exchanger (10) and a second heat exchanger (11) and said first feed circuit (6) presenting, downstream from the pump (8b) of the first turbopump (8), a branch-off (13) passing through the first heat exchanger (10) and the turbine (8a) of the first turbopump (8); and
**characterized in that** said second feed circuit (7) presents, downstream from the pump (9b) of the second turbopump (9), a branch-off (14) passing through the second heat exchanger (11) and the turbine (9a) of the second turbopump (9); and **in that** it also includes at least one secondary thruster (15) connected to said branch-offs (13, 14) downstream from the turbines (8a, 9a) of the first and second turbopumps (8, 9).

2. A reaction propulsion device (1) according to claim 1, including valves (16) interposed between said turbines (8a, 9a) and said at least one secondary thruster (15).

3. A reaction propulsion device (1) according to claim 1 or claim 2, having a plurality of secondary thrusters (15) connected downstream from the turbines (8a, 9a) of the first and second turbopumps (8, 9).

4. A reaction propulsion device (1) according to any one of claims 1 to 3, wherein said first heat exchanger (10) and/or said second heat exchanger (11) is/are incorporated in an outer wall (12) of said propulsion chamber (5).

5. A reaction propulsion device (1) according to claim 4, wherein the first and/or second heat exchanger (10, 11) incorporated in the outer wall (12) of the propulsion chamber (5) includes at least one propellant duct adjacent to an outer side of said wall (12).

6. A space launcher including at least one reaction propulsion device (1) according to any preceding claim.

7. A propellant feed method for feeding propellants to a reaction propulsion device (1), wherein the following steps are performed:
delivering a main flow of a first propellant to a propulsion chamber (5) of a main thruster (4) via a first feed circuit (6) in which the first propellant is pumped by a pump (8b) of a first turbopump (8);
diverting a secondary flow of the first propellant from the main flow of the first propellant, downstream from the pump (8b) of the first turbopump (8), heating it by means of the propulsion chamber (5) of the main thruster (4) in a first heat exchanger (10), and expanding it in a turbine (8a) driving the first turbopump (8);
also delivering a main flow of a second propellant to the propulsion chamber (5) of the main thruster (4) via a second feed circuit (7) in which the second propellant is pumped by a pump (9b) of a second turbopump (9); and
**characterized in that**:
diverting a secondary flow of the second propellant from the main flow of the second propellant, downstream from the pump (9b) of the second turbopump (9), heating it by means of the propulsion chamber (5) of the main thruster (4) in a second heat exchanger (11), and expanding it in a turbine (9a) driving the second turbopump (9); and
delivering said secondary flows of the first and second propellants, after they have expanded in the turbines (8a, 9a) of the first and second turbopumps (8, 9) to at least one secondary thruster (15).

8. A propellant feed method according to claim 7, wherein thrust from said at least one secondary thruster (15) is used for attitude control.

9. A propellant feed method according to claim 7 or claim 8, wherein the propellant flows delivered to each secondary thruster (15) are regulated by valves (16) interposed between said turbines (8a, 9a) and said at least one secondary thruster (15).

10. A propellant feed method according to any one of claims 7 to 9, wherein said first and/or second propellant is/are liquid upstream from the first and/or second heat exchanger (10, 11), and gaseous downstream.
